(19) Europäisches Patentamt
European Patent Office
Office européen des brevets

(11) EP 3 286 764 B1

(12) EUROPEAN PATENT SPECIFICATION

(45) Date of publication and mention
of the grant of the patent:
**25.09.2019 Bulletin 2019/39**

(51) Int Cl.:
**G21B 3/00** (2006.01)

(21) Application number: **16714358.5**

(86) International application number:
**PCT/EP2016/057012**

(22) Date of filing: **31.03.2016**

(87) International publication number:
**WO 2016/169741 (27.10.2016 Gazette 2016/43)**

(54) **A METHOD FOR USE IN POWER GENERATION AND AN ASSOCIATED APPARATUS**

VERFAHREN ZUR ENERGIEERZEUGUNG UND ZUGEHÖRIGE VORRICHTUNG

PROCÉDÉ DESTINÉ À ÊTRE UTILISÉ DANS LA PRODUCTION D'ÉNERGIE ET APPAREIL ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.04.2015 EP 15162307**

(43) Date of publication of application:
**28.02.2018 Bulletin 2018/09**

(60) Divisional application:
**19181230.4**

(73) Proprietor: **RIToN Holding Ltd Tortola (VG)**

(72) Inventors:
• **Lidgren, Hans**
  **98000 Monaco (MC)**
• **Lundin, Rickard**
  **112 60 Stockholm (SE)**

(74) Representative: **AWA Sweden AB**
  **P.O. Box 1066**
  **251 10 Helsingborg (SE)**

(56) References cited:
**WO-A1-2015/012807    WO-A2-2005/017916
US-A- 4 101 396**

• **Imasaki et al.: "Gamma Ray Transmutation", , 6 June 2006 (2006-06-06), pages 1-3, XP002754113, Retrieved from the Internet: URL:http://www.ile.osaka-u.ac.jp/jp/inform ation/publication/annualreport/2006/6/6.29 .pdf [retrieved on 2016-02-09]**
• **J. Champion: "Resonant Atomic Transmutation of Metals", , 1 November 2001 (2001-11-01), pages 1-4, XP002754114, Retrieved from the Internet: URL:http://www.human-resonance.org/transmu tation.html [retrieved on 2016-02-09]**
• **VERBITSKY ET AL.: "Investigation of Giant-Dipole-Resonance Decay in the (y-n) reactions on 52Cr and 51V nuclei", PHYSICS OF ATOMIC NUCLEI, vol. 72, no. 3, 2009, pages 387-395, XP002754115,**
• **R. Lundin et al.: "On the Attraction of Matter by the Ponderomotive Miller Force", Cornell University library , 26 May 2010 (2010-05-26), pages 1-13, XP002754116, DOI: arXiv:1005.4913 Retrieved from the Internet: URL:http://arxiv.org/abs/1005.4913 [retrieved on 2016-02-09]**

## Description

<u>Field of the invention</u>

The present invention relates to a method for use in power generation. More specifically, the present invention relates to a method for use in power generation which utilizes neutron capture by a target matter whereby electromagnetic radiation output energy is produced. The present invention is also related to an associated apparatus.

<u>Background art</u>

Nuclear spallation and neutron capture are factual concepts in nuclear physics. Nuclear spallation implies fragmentation of nucleons by energetic particle beams in particle accelerators which are used to produce beams of energetic neutrons. On the other hand, neutron capture is a fusion process whereby nucleons capture neutrons, thereby increasing their masses.

In the former case, spallation requires a rather high energy input. In the latter case, neutron capture by isotopes in the lower part of the table of nuclides gives an output of energy. Because spallation by energetic particle beams requires a much higher energy input as compared to the potential energy received by neutron capture, it has typically not been considered as a useful means for energy production.

In view of the above, there is need for a technical advancement for achieving energy production which overcomes the problems stated above.

Imasaki et al. : "Gamma Ray Transmutation", 6 June 2006 (2006-06-06), pages 1-3, discloses a nuclear spallation source.

<u>Summary of the invention</u>

It is therefore an object of the present invention to provide an improved method for use in power generation which is more controllable.

Additionally, it is also an object of the present invention to provide an associated apparatus.

According to a first aspect of the invention, there is provided a method for use in power according to claim 1.

The first target matter and the second target matter will here and in the following collectively be referred to as fuel, or reactor fuel.

By exposure of electromagnetic radiation, EM radiation, input energy is here meant that EM radiation irradiates at least a portion of the first target matter. The radiation may comprise photons having at least one frequency, or frequency mode. In a first example, the radiation comprises photons having a plurality of frequency modes. In a second example, the radiation is substantially monochromatic comprising photons with a fixed frequency. Moreover, the radiation may have a preferred level of intensity and/or power. The preferred level of intensity and/or power may be associated with specific frequencies.

The EM radiation input energy may transfer input energy and input momentum to the first target matter. The energy transfer may be provided by means of a wave-particle acceleration process. Optionally, the EM radiation may be polarized.

At least a portion of the first target matter may assume a high-energy state. When the first target matter is brought into the higher energy state via wave resonance, neutrons may be released, or emitted. In other words, the resonance wave energy may energize the first target matter to produce fission energy and to produce neutrons. This process may be referred to as spallation. The release may occur when the input energy is higher or equal to a threshold energy. Additionally, however, a quantum mechanical tunneling effect may allow for a release below the threshold energy.

The first target matter assumes a higher energy state whereby wave energy is transferred to at least a portion of the first target matter. The wave-particle acceleration process, or equivalently, the process of wave resonance, may be chosen based on specified physical properties of the reactor geometry and the fuel contained therein. The physical properties may be associated to physical properties of the first target matter. By way of example, these physical properties may relate to a type of material comprised in the first target matter, the type of lattice structure of the material, physical quantities of the material, such as its atomic mass, number of atoms, atomic separation distance, speed of sound, characteristic plasma velocity, local temperature, average temperature, etc., length dimensions of the lattice structure of the material, length dimensions of a grain structure of the material, and geometry of the lattice structure of the material. The physical properties may also be a local resonance frequency of the first target matter. The wave resonant energy, i.e. the energy received by the resonant wave acceleration (pumping) process, may be transferred to the first target matter at a preferred intensity. The wave resonant energy $W$ has an associated frequency $\omega$ and an associated resonant wave length $\lambda$. Ions in the first target matter may be accelerated by the EM radiation input energy.

According to the inventive method, neutrons are produced, or released. In a non-limiting example, the neutrons may be cold neutrons. By cold neutrons is in this application meant that the kinetic energy of the neutrons are specified in the range from 0 eV to 0.025 eV, where eV denotes electronvolt. In particular, the cold neutrons may be thermal neutrons. In another non-limiting example, the neutrons may have kinetic energies between 0.025 eV and 1 eV. In yet another non-limiting example, the neutrons may be slow neutrons having kinetic energies between 1 eV and 10 eV. Kinetic energies between 10 eV and 50 eV are also conceivable.

Given a constant supply of EM radiation input power, the number of neutrons produced by the first target matter may increase with time. In a non-limiting example, the number of neutrons produced after a spallation initiation time may be between $10^{10}$ and $10^{20}$ neutrons per second per $cm^2$.

The first target matter may be in an ionized state or in a plasma state when the neutrons are released. The second target matter may be in a solid or in a liquid state when capturing the neutrons.

The first target matter may comprise at least one of deuterium, D, and $^7$Li. One advantage of using D is that it is cheap. Another advantage is that the use of D it leads to a high net gain.

Moreover, the second target matter may comprise at least one of $^{40}$Ca, $^{46}$Ti, $^{52}$Cr, $^{64}$Zn, $^{58}$Ni, $^{70}$Ge and $^{74}$Se. Any one of these materials may generate excess energy by neutron capture. More particularly, the process of neutron capture may release more energy than the energy required for neutron spallation.

The second target matter may also comprise heavier isotopes of the elements presented above. The elements may be short-lived or stable. Note that these isotopes may be produced by neutron capturing of any of these elements. For example, the second target matter may comprise $^{60}$Ni or $^{62}$Ni which may result from neutron capturing by $^{58}$Ni.

By means of the inventive concept, there are normally no element transmutations. Instead, there are isotope shifts of the first and the second target matter. By isotopes is meant a set of nuclides having the same atomic number Z but having different neutron numbers N=A-Z, where A is the mass number. In the process of isotope shift, the mass number A of the isotope is shifted by at least one integer step. The first isotope shift may be an isotope shift from an isotope $^A$P with mass number A to an isotope $^{A-1}$P with mass number A-1.

The isotope shift in an isotope $^A$P may originate from a reaction channel

$$^A\text{P} + W_s \rightarrow n + {}^{A-1}\text{P (g.s.)},$$

where $W_s$ denotes a spallation energy, where "n" denotes a neutron, and where "g.s." denotes a ground state of $^{A-1}$P. This reaction is associated with a specific threshold energy, conventionally expressed in eV. This type of reaction is also associated with specific threshold energies.

There may be similar reaction channels starting out from $^A$P which may result in isotopes $^{A-k}$P, where k=1,2,3,.... For example, the processes above wherein the atomic number is shifted in one step may be repeated k times, or the transition in k steps may be direct.

The spallation energy $W_s$ is a supplied energy to a portion of the first target matter by means of the irradiation exposure for allowing release of at least one neutron. An energy state of the first target matter before the irradiation may be excited into a higher energy state. The higher energy state may be reached by absorption of energy by the first target matter. For example, the arbsorbed energy may be turned into kinetic energy and/or vibrational energy of the first target matter.

In a first non-limiting example, an isotope shift in lithium may originate from the reaction channel

$$^7\text{Li} + W_s \rightarrow n + {}^6\text{Li (g.s.)},$$

$W_s$ is the spallation energy and where "g.s." denotes a ground state of $^6$Li. The threshold energy for this reaction is 7.25 MeV. It is noted that $^6$Li as well as $^7$Li are stable isotopes per se, but that the reaction above may be induced by irradiation above the threshold energy.

In a second non-limiting example, the isotope shift may originate from the reaction channel $D + W_s \rightarrow n + {}^1\text{H}$, where D is deuterium $^2$H and where H is protium, i.e. hydrogen. The threshold energy for this reaction is 2.25 MeV.

Element shifts may also occur via beta decay. For instance, neutron capture of Nickel up to the unstable isotopes $^{63}$Ni and $^{65}$Ni leads via beta ($\beta^-$) decay to $^{63}$Cu and $^{65}$Cu, respectively, i.e. neutrons are converted to protons. Conversely, neutron capture of $^{59}$Ni may via $\beta^+$ decay lead to $^{58}$Co, i.e. a proton converted to a neutron. Incidentally, the above unstable isotopes have high neutron capture cross-sections. The energy conversion process may therefore involve a complex meandering of neutron capture isotope shifts and $\beta^\pm$ decay element shifts, eventually leading to stable elements.

The first target matter may comprise at least one isotope $^A$P. In a first example, the first target matter comprises solely one isotope. In a second example, the first target matter comprises two isotopes. In a third example, the first target matter comprises a plurality of isotopes. The isotope $^A$P in the first target matter preferably has a low nuclear binding energy for allowing a release of neutrons. Moreover, the isotope $^A$P in the first target matter preferably has a nuclear binding energy which is larger than the nuclear binding energy of the isotope $^{A-1}$P.

The nuclear binding energy may be measured as a total nuclear binding energy in a nucleus. Alternatively, the nuclear binding energy may be measured as a nuclear binding energy per nucleon in the nucleus. In particular, the nuclear binding energy may be measured as an average nuclear binding energy per nucleon in the nucleus.

The second target matter may comprise at least one isotope $^BQ$, where B is the mass number. In a first example, the second target matter comprises solely one isotope. In a second example, the second target matter comprises a plurality of isotopes. The isotope $^BQ$ in the second target matter has a nuclear binding energy which is smaller than the nuclear binding energy of the isotope, or isotopes, into which it may be shifted into after the process of neutron capturing.

By EM radiation output energy is here meant energy which is released in the process of neutron capture. The energy will be released in the form of electromagnetic waves/photons covering a wide range of frequencies (primaries, secondaries, etc.).

The neutrons may be captured by a stable isotope or by an unstable isotope. In one example, the neutron capturing results in a stable isotope. In another example, the neutron capturing results in an unstable isotope. One reaction channel for neutron capture involving an isotope $^BQ$ may be written as

$$^BQ + n \rightarrow {}^{B+1}Q + W_c,$$

where $W_c$ is the energy released from neutron capture. This reaction may be repeated so that two or more neutrons are captured, resulting in isotopes $^{B+2}Q$, $^{B+3}Q$, $^{B+4}Q$, etc. These types of isotopes may collectively be written as $^{B+k}Q$, where k=1,2,3,.... Indeed, in one example, only one neutron is captured by the second target matter. In another example, two, three or four neutrons are captured by the second target matter. In yet another example, a plurality of neutrons are captured by the second target matter. The number of captured neutrons may be correlated with a neutron flux produced by the first target matter. In particular, the capturing of neutrons may be conditioned by a critical neutron flux. For example, the critical flux may be between $10^{14}$ and $10^{20}$ neutrons per cm$^2$ per second.

For the combined process of production of neutrons and neutron capturing to be effective, the neutron production rate is preferably sufficiently high for an energy gain ratio, defined as an output power divided by an input power, to exceed unity.

In accordance with the inventive concept, there is provided a method for use in power generation. The first target matter produces neutrons by bringing it into a resonance state. The production of neutrons by the first target matter and the neutron capturing by the second target matter operate together for producing output energy. A material in the second target matter is transferred to a lower-energy state whereby energy is produced. For example, $^{58}Ni$ may be shifted into $^{60}Ni$ by capturing two neutrons.

Moreover, the first target matter may be heated. The heat may be provided by a heating device. A properly designed heating device may produce waves that brings the first target matter into the resonance state. The combined method of neutron spallation and neutron capturing may be implemented by maintaining a critical temperature in the fuel and to fulfill resonance criteria. The resonance criteria will be described further below.

The process of neutron production requires lower energy input than the energy output provided by neutron capture. In particular, energy in the form of radiation may be released. For example, photons which are characterized by having momenta **p,** or energies $W=|\mathbf{p}|\cdot c$, may be released. Thereby, the inventive method may be utilized as a partial step in power generation. For example, the excess energy provided may be used for operating a steam turbine for generating electricity.

Another advantage of using neutron capturing is that the neutron can enter the nucleus more easily since the neutron has no charge. Indeed, processes involving charged particles such as protons, require considerably higher energies for providing nuclear fusion since a Coloumb barrier of the nucleus has to be penetrated.

Also, by means of the inventive method, a more controlled method for use in power generation is provided. Indeed, the rate of neutron production may easily be controlled by adjusting the external power, but even more so by adjusting the intensity and wave frequency content of the EM input radiation. The rate of neutron production is directly correlated with the power and/or the intensity and wave frequencies of the EM input radiation.

In the following, the concept of gradient force in relation to the first and the second targer matter will be explained. As will be elaborated on below, the gradient force may arise from the penetration of EM waves into matter in any aggregate state.

In plasma physics, the ponderomotive force is well-known to be an effective description of a time-averaged non-linear force which acts on a medium comprising charged particles in the presence of an inhomogeneous oscillating EM field. The basis of the time-averaged ponderomotive force is that EM waves transfer energy and momentum to matter.

Of the five potential ponderomotive effects, the Miller force and the Abraham force are considered to be the most powerful in a weakly magnetized, or magnetic gradient-free, environment. However, depending on the heating method effects of the magnetic gradient force cannot be excluded. Moreover, the Barlow force, induced by gas particle collisions may also influence the dynamics of the system.

The overall enabling ponderomotive acceleration force considered here is the Miller force or, equivalently, the gradient force.

Under the assumption that a conducting solid body may be treated as a plasma, or a solid-state plasma, the concept of gradient forcing may be applied. For two reasons, an Alfvén wave analogy will be chosen in deriving the gradient force in solids. Firstly, because Alfvén waves have been observed in plasmas at all states, i.e. in plasma states, gaseous states, liquid states, and solid states. Secondly, because Alfvén waves have a frequency-independent response below resonance.

It is noted, however, that in general there may be a mixture of Alfvén waves and other waves, such as acoustic waves, in the solid body.

Thus, the gradient force and a related gradient pressure arises in addition to forces generated by an ordinary EM radiation pressure on a body, wherein the body may be in any aggregate state.

The solid body may be described as comprising ions and electrons, giving rise to a total neutral charge. Since the ion mass is typically more than 1800 times greater than the electron mass, the electron mass may be neglected. The mass density and the corresponding forcing upon the plasma is therefore determined by the ion mass, $m$. Alfvén waves having a frequency $\omega$ propagate along magnetic field lines $\mathbf{k} = (0,0,k)$ in Cartesian coordinates and have linear polarization. The following expression applies for the longitudinal gradient force (in cgs units) governed by Alfvén waves in a fluid:

$$F_z = -\frac{e^2}{4m(\omega^2 - \Omega^2)}\frac{\partial E^2}{\partial z} \, , \qquad (1)$$

where $e$ is the elementary charge and where $\Omega$ is a cyclotron resonance frequency. The spatial gradient of the squared wave electric field $E^2$ in the $z$-direction determines the magnitude of the force. It is noted that the expression (1) has a singularity at $\omega^2 = \Omega^2$. Moreover, the gradient force is attractive for $\omega^2 < \Omega^2$ and repulsive for $\omega^2 > \Omega^2$. Thereby, low-frequency Alfvén waves having $\omega^2 < \Omega^2$ attract charged particles towards the wave source, while high-frequency Alfvén waves having $\omega^2 > \Omega^2$ repel the particles. Attraction at low frequencies may be conceived as intuitively wrong. However, it clearly applies for a plasma and has also been experimentally and theoretically confirmed for neutral solid-state matter. In addition to having this bipolar directional force shift at wave resonance, the gradient force is independent of the sign of the charge of the particle, due to the factor of $e^2$. This implies that the force for positive ions and electrons is directed in the same direction.

It is noted that neutral matter may be in a fluid state, a gas state, a plasma state, or a solid state. Since neutral matter on an atomic and nuclear level constitute charges, one may therefore consider atomic oscillations (e.g. Brownian motions) and interatomic vibrations as "fundamental frequencies". The electric field term of EM waves should therefore affect an atomic "media" bound by e.g. Van-der-Wahl forces in a similar way as a plasma bound by a strong magnetic field.

For unmagnetized neutrals the analogy implies that wave energy may penetrate, since the gradient force works on atomic protons and electrons collectively.

For low-frequency waves such as $\omega^2 \ll \Omega^2$, the expression in equation (1) simplifies since $\omega$ may be ignored. In this case, the force becomes weakly attractive, regardless of atomic structure or mass.

However, approaching resonance frequency $\omega^2 = \Omega^2$ the gradient force increases non-linearly. Resonance frequencies in plasma physics are related with the intrinsic fluid properties, such as a plasma density, a particle mass, a particle inertia, and the magnetic field. It is declared that the same applies for solid state matter, except that mechanical and interatomic Van de Wahl binding forces also are involved.

By analogy, under the assumption that the EM waves irradiating the neutral fluid/solid body are linearly polarized, the gradient force exerted on individual particles/atoms of mass $m_a$ by linearly polarized EM waves with a radiation electric field E becomes

$$F_z = -\frac{e^2}{4m_a(\omega^2 - \Omega_a{}^2)}\frac{\partial E^2}{\partial z} \, . \qquad (2)$$

In particular, this expression may be valid for the first target matter. The theoretical gradient force versus frequency in expression (2) resembles that of expression (1), except that we have now introduced a resonance frequency $\Omega_a$. The resonance frequency $\Omega_a$ may be a resonance frequency for matter in any aggregate state, i.e. solid, liquid, gas or plasma. The gradient force is again attractive over the entire frequency range below resonance, i.e. for $\omega^2 < (\Omega_a)^2$. Above resonance $\omega^2 > (\Omega_a)^2$, the force is repulsive. At frequencies well below resonance, $\omega^2 \ll (\Omega_a)^2$, the gradient force is independent of wave frequency and the following expression applies:

$$F_z \approx \frac{e^2}{4m_a\Omega_a{}^2}\frac{\partial E^2}{\partial z} \ . \qquad (3)$$

If the matter is in a solid aggregate state, the resonance frequency may be written as $\Omega_a = c/a$, where a is the interatomic distance and c is the local speed of light in the media. In this case we get for $\omega^2 \ll (\Omega_a)^2$ the approximate expression

$$F_z \approx \frac{a^2 e^2}{4m_a c^2}\frac{\partial E^2}{\partial z} = \xi(a, m_a)\frac{\partial E^2}{\partial z} \ . \qquad (4)$$

Here, the force depends on a material constant, $\xi(a,m_a)$, and the spatial gradient of the squared wave electric field $E^2$ propagating into the matter. The wave energy may go into heating and/or to kinetic energy. Wave attraction is determined by the spatial gradient of $E^2$ which may be written as the quotient $\delta E^2/\delta z$, where $\delta E^2$ is a difference of $E^2$ over a differential interaction length $\delta z$. A material constant $\xi(a,m_a)$, the gradient $\delta E^2/\delta z$ and the transverse wave electric field E, now determines the gradient force exerted on individual atoms in the body. Notice that the interatomic distance a defines the binding force, or tension, in analogy with the magnetic field controlling the plasma motion. The a-factor may be a parameter defining resonance. There may be additional parameters for defining resonance.

More generally, u in the expression $\Omega_a = u/a$ is related with the local speed of EM waves in the media (e.g. acoustic, ion acoustic).

Analytical results derived from expression (4) has been demonstrated to be in good agreement with experimental findings from the Cavendish vacuum experiment.

For the first or the second targer matter, the following expression for the gradient force may be obtained from equation (4) above:

$$F_z \approx K(a, m_a)\frac{\partial E^2}{\partial z} \ . \qquad (5)$$

Here $K(a,m_a)$ are characteristic properties of first and/or the second target matter. The characteristic properties may be a corresponding atomic mass, a number of atoms, and an atomic separation distance, etc.

The gradient force may become stronger when the input power of the input EM radiation becomes stronger. For example, the gradient force in the low-frequency range $\omega^2 \ll (\Omega_a)^2$ is directly proportional to the input power of the input EM radiation.

As noted above, there may also arise Abraham forces in the solid body. By analogy to a plasma, the longitudinal Abraham force may in this case be described by $F_z = \pm(\frac{mc^2}{2c_A B^2})\,\partial E^2/\,\partial t,$ being proportional to the temporal variation of the squared electric field. $c_A$ is the Alfvén velocity and $B$ is the magnetic field. The plus or minus sign corresponds to wave propagation parallel or antiparallel with the direction of the magnetic field $B$, respectively. The Abraham force may be significant for fast changes of E and/or weak magnetic fields. The latter may be associated with low cyclotron resonance frequencies which may give low neutron production rates. The merit of the Abraham force may instead be to promote heating by the fast directional EM field changes. Additionally, the Abraham force may maintain longitudinal focusing in the reactor.

The fact that EM waves in a plasma may lead to attraction is not obvious. Magnetohydrodynamic waves, MHD waves, are a class of waves in fluids where plasma and magnetic field display a mutual oscillation, the plasma considered "frozen" into the magnetic field. In a spatially unidirectional magnetic field the plasma resonance frequency, rather than the direction of wave propagation (+z-direction), determines the direction of the force. From $\Omega = eB/mc$ we have for low frequency waves, $\omega^2 \ll \Omega^2$ that $F_z \approx \frac{mc^2}{2B^2}\frac{\partial E^2}{\partial z}.$ This implies that the force is constant and independent of wave frequency in a homogeneous medium with constant B at very low frequencies, the force being proportional to the gradient of the EM-wave intensity. Because the wave intensity is decreasing during interaction (exerting force on matter) the force is directed opposite to the wave propagation direction.

The concept of MHD waves stems from the fluid description of plasmas. MHD waves are governed by the magnetic tension in magnetized plasma. The stronger the magnetic tension, the weaker the wave group velocity and gradient force. In a similar way, MHD waves in solid-state plasma are governed by their dielectric properties and inter-

atomic tension. While the local resonance frequency in gaseous magnetized plasma is determined by the ion gyrofrequency, the local resonance frequency in neutral solids and neutral gases, comprising atoms is less obvious. However, as already noted, the gradient force is charge-neutral, implying that the force on the positive (protons) and negative (electrons) charged particles goes in the same direction. The analogy with MHD waves in plasma is useful, because ideal MHD implies no particle transport per se in matter. Instead matter is subject to forcing by the local release of wave energy, characterized by a spatial gradient of the wave electric field.To establish neutron capturing according to the inventive method, a certain mix of "spallation nucleons", such as $^7$Li or D, and high-yield neutron capture nucleons, such as $^{58}$Ni or $^{40}$Ca, is required. In the course of this nuclear process, and depending on the environment, other transfer of states, e.g. electron capture, may take place. However, with adequate system design these processes may have minor implications for the output energy budget.

Depending on a fuel temperature and wave resonance, the neutron production rate in a mixed $^7$Li-$^{58}$Ni or $^7$Li-$^{40}$Ca target may achieve a state where an output power caused by neutron capturing substantially exceeds an input power.

Besides heating the reactor, excess power from neutron capture may also enhance the spallation rate. The latter may be achieved by enhancing the input power of EM radiation to the reactor. Additionally, wave power near resonance may further improve the spallation rate. Because the theoretical ratio between neutron spallation and the neutron capturing process $^{58}$Ni - >$^{60}$Ni may vary between 1.4 for $^7$Li and 3,6 for deuterium, externally driven neutron spallation alone may only reach the above-mentioned gains. However, excess power coupled with neutron capture may feed back to the neutron production process and lead to further enhanced spallation rates. This instrinsic neutron capturing driven spallation process, may raise the power gain additionally. For example, the power gain may be raised by an order of magntitude as compared to the directly driven process. Considering the bipolar directional force shift of the gradient force, as explained above, excess heating or wave frequencies reaching above resonance must be avoided. If not, the system may collapse by gradient force repulsion.

Next, various embodiments of the inventive concept will be described.

According to one embodiment, the EM radiation input energy is sourced by EM radiation comprising at least one resonance frequency mode comprised in a frequency interval. The EM radiation input energy may also contain a wide spectrum of harmonics with EM radiation comprising a plurality of frequencies with harmonics approaching at least one resonance frequency mode. The act of exposing the first target matter to EM radiation having a resonance frequency mode may bring the first target matter into a state close to, yet below resonance.

The resonance frequency may be a mechanical resonance frequency. Alternatively, resonance frequency may be an EM wave resonance frequency.

The resonance frequency may be associated with an aggregate state of the first target matter. In particular, there may be one resonance frequency of the first target matter in a solid state, one resonance frequency of the first target matter in a gas state, and another resonance frequency of the first target matter in a plasma state.

Preferably, the resonance frequency mode is a frequency which is close to a critical resonance frequency. This may be a resonance criterium. The critical resonance frequency may be a frequency at which the gradient force becomes divergent and/or at which the gradient force changes direction.

By way of example, the resonance frequency may be considered to be close to the critical resonance frequency if the ratio between the resonance frequency and the critical resonance frequency is between 0.8 and 0.999, or more preferably between 0.9 and 0.99.

Moreover, the resonance frequency mode preferably is a frequency which is smaller than the critical resonance frequency mentioned above. This may be a resonance criterium. A resonance frequency smaller than the critical resonance frequency may result in a contraction of the fuel, as has been indicated above and will be described further below.

Importantly, the resonance frequency mode may be a frequency anywhere in the frequency interval. However, the amount of neutrons produced may depend on which resonance frequency mode that is used.

The frequency interval may extend from a lower frequency to the critical resonance frequency. For example, the external wave generator may provide a first resonance frequency mode and a second resonance frequency mode, whereby the first resonance frequency mode is closer to the critical resonance frequency than the second resonance frequency mode. By exposing the first target matter to EM radiation input energy with the first resonance frequency mode may produce more neutrons than by exposing the first target matter to EM radiation input energy with the second resonance frequency mode. Additionally, an increased input power may also increase the rate of neutron production.

Thus, the wave energy transfer preferably is a resonant energy transfer. However, it may also be a non-resonant energy transfer. By resonant energy transfer is meant that the frequency of the EM radiation is comprised in the frequency interval close to the critical resonance frequency.

The at least one resonance frequency mode may comprise multiples of a single resonance frequency. This may be a resonance criterium. For example, a resonance frequency $\omega$ may give rise to the multiple resonance frequencies $2\cdot\omega$, $3\cdot\omega$, $4\cdot\omega$, $5\cdot\omega$,..., etc.

The resonance frequency mode may be chosen such that an associated energy is equal to or higher than the threshold energy for causing spallation of the neutrons in the first target matter.

By way of example, when the resonance frequency mode is close to the critical resonance frequency, the gradient force may have a strength between $10^{-5}$ N and 1 N. In another example, the gradient force may have a strength between 0.01 N and 0.1 N. It is clear, however, that other strengths are equally conceivable.

A neutron production rate may be dependent on at least one of the strength of the gradient force, a temperature of the fuel, and the resonance frequency.

In a first example, the critical resonance frequency associated to a gas/plasma for $^7$Li is $\Omega_a = 1.3 \cdot 10^{16}$ Hz. $\Omega_a$ is then based on a wavelength interatomic distance $a = 1.1 \cdot 10^{-8}$ m, the wave propagating at the speed of light (c).

In a second example, the critical resonance frequency for $^7$Li$^+$, being an ion acoustic wave resonance of the corresponding gas/plasma, is $\Omega_a = 7.9 \cdot 10^{13}$ Hz. The average interactomic in the gas/plasma is $a = 1.1 \cdot 10^{-9}$ m.

In a third example, the critical frequency and average interatomic distance for D$^+$ for ion acoustic waves of the corresponding deuterium gas/plasma, is $\Omega_a = 1.3 \cdot 10^{13}$ Hz and $a = 6.1 \cdot 10^{-9}$ m respectively.

According to one embodiment, at least one resonance frequency mode is associated with an inter-atomic distance of the first target matter. For a given portion of the first target matter, the atoms may be arranged in a three-dimensional lattice. If the first target matter comprises several isotopes, the portion may be related to one specific isotope having a fixed lattice structure. The inter-atomic distance in directions x, y and z of the lattice may be written as $a_x, a_y$ and $a_z$, respectively. Clearly, the inter-atomic distances $a_x, a_y$ and $a_z$ may in general be different and depends on the specific type of lattice.

The resonance frequency mode $\omega_i$ may be related to the inter-atomic distance $a_i$ by the relation $\omega_i = u_i/a_i$, where $u_i$ is constant and where i=x,y or z. The constant $u_i$ has the dimensions of speed or velocity, i.e. $[u_i] = L \cdot T^{-1}$, where L and T is a length parameter and a time parameter, respectively. The constant $u_i$ may be component of a velocity in a specific direction or a magnitude of a velocity. In a first non-limiting example, the constant $u_i$ is a sound velocity of a portion of the first target matter. The sound velocity may be an ion sound velocity. In the second and third non-limiting example, the constant $u_i$ is a plasma wave velocity $u_w$ of a portion of the first target matter.

According to one embodiment, the at least one resonance frequency mode is a gas or plasma resonance frequency mode of the first target matter, a plasma resonance that characterize magnetized and/or non-magnetized plasmas of the first target matter, or a solid/fluid/gaseous/plasma resonance frequency mode of said second target matter.

According to one embodiment, the method further comprises bringing the first target matter into a plasma state. In fact, the gradient forcing may become dominant in the plasma state of the first target matter.

According to one example, the method further comprises bringing the first target matter from a solid state into a liquid state. The method may further comprise bringing the first target matter from a liquid state into a gaseous state. Also, the method may further comprise bringing the first target matter from the gaseous state into a plasma state.

According to one example, the second target matter is maintanied in a solid state as a fine-grained powder (low-temperature regime). According to one example, the method further comprises bringing the second target matter into a liquid, or gaseous state.

According to one embodiment, the method further comprises heating at least one of the first target matter and the second target matter. By means of this embodiment, more neutrons may be produced. Indeed, a hotter fuel may be subject to compression by the gradient force, which is mutually beneficial for neutron production and neutron capture.

According to one example, the heating is provided by means of induction heating. The induction heating may be two- or three-phase induction heating. An advantage of this example is that the heating of the fuel may be performed by means of a heating device which does not have to make physical contact with the fuel. Rather, the heating may be accomplished by means of induced eddy currents which implies resistance heating in the fuel. Also, the heating may be accomplished by means of magnetic hysteresis losses in the fuel.

As indicated above, another implication of the gradient force is that hot matter may attract cold matter. For example, the first target matter may become cooler when neutrons are released or emitted. Thereby, the first target matter may be attracted to the second target matter. In particular, the the first target matter may be attracted towards a core of the second target matter.

The heating of the fuel may have consequences for a core of the fuel even when the first target matter is irradiated with EM radiation having frequencies well below the critical resonance. High temperatures of the fuel may lead to gradient-force core contraction and attraction of ambient particles. Regardless of the aggregate state of matter, wave heating near resonance may lead to a substantial forcing. Accumulated resonance forcing may eventually reach fission/spallation energies for the first target matter.

Heating, evaporation and ionization of the first target matter may lead to neutron spallation in the reactor by virtue of the high core temperature only, but in this case the production rate should be low. The force may be orders of magnitudes higher near the resonance frequency.

A number of resonances may be conceived, each related to their corresponding aggregate states. Considering the power of EM forcing, EM forcing will dominate a neutral gas as well. In particular, this is valid in an environment where an ionization rate exceeds 0.01%. For that reason, the spallation process may be treated as a process governed by plasma resonances. The ionization rate for the first target (Lithium and Deuterium ions), is a balance between ionization and recombination. Recombination means that ions goes back to neutrals. To maintain high ionization rate in a dense gas environment requires excess EM forcing.

According to one embodiment, the EM radiation input energy is provided in the form of a square wave signal or a sinus wave signal. The square wave signal comprises a plurality of harmonics, i.e. frequency modes. In particular, the square wave signal may comprise at least one resonance frequency mode. Other types of signals are equally conceivable. In particular, non-sinus signal may be preferred. For example, a saw-tooth signal may be provided. Additionally, irregular signals may be provided.

The method further comprises, when an EM radiation output power is produced above a power threshold value, maintaining the production of EM radiation output energy by exposing the first target matter to EM radiation maintenance energy. An advantage of this feature is that once the EM radiation output energy is produced above the power threshold value, additional EM radiation output energy is produced by inputting maintenance energy to the first target matter. In particular, this may be achieved while the heating is gradually turned off. Additionally, the maintenance energy may be sustained when the heating has been completely turned off. The maintenance energy is supplied from a source which is separate from the heating device mentioned above.

In one example, the first target matter is solely exposed to EM maintenance energy. In particular, there is no heating, such as external heating, of the first target matter. In another example, the first target matter is exposed to heating as well as EM maintenance energy.

According to an alternative example, the method further comprises, on a condition that the neutrons are produced above a threshold value, maintaining the production of EM radiation output energy by exposing the first target matter to EM radiation maintenance energy.

To reiterate, a conservative and energy saving approach may be to run the neutron capturing process on low power input. Upon reaching a first neutron capturing quasi-steady state at high power, a low-power high-frequency EM wave source working close to, yet below, resonance frequency may take over, leading to a second quasi-steady state. By second quasi-steady state is here meant that less input power is needed for maintaining the process of neutron capturing and hence the power generation. Low-power high-frequency waves close to the critical resonance are sufficient to raise neutron spallation rates from a temperature baseline mainly maintained by internal heating.

After reaching a desired output power, the reactor may operate on a constant, almost self-sustained power output, regulated by minor corrective inputs from a wave source. The wave source may be a low-power high-frequency wave source. Besides having better control of the neutron capturing process, the above-mentioned process may control the high-power gain, and offers a sustainable operation of the reactor.

According to one embodiment, the EM radiation maintenance energy is sourced by EM radiation comprising at least one resonance frequency mode comprised in a frequency interval.

The EM radiation maintenance energy is provided by means of a wave source. The wave source, or wave generator, is an EM wave source. In a non-limiting example, the wave source is a discharge electrode. By means of the wave source the maintenance energy may be provided in a more controlled manner. Additionally, a lower power may be needed for maintaining the production of neutrons. Indeed, by means of the wave source steady operations may be maintained at reduced power. The reduced power may be considerable as compared to the power provided by means of the combined heating and EM radiation input energy.

According to one example, the method may comprise the act of a light weight thermoelectric generator for deep space probes. The source unit operating in low-power maintenance mode, is capable of long-term (>30 years) operation, requiring a miniscule of target matter. The advantage, compared to other solutions, is that no radioactive elements are needed for providing power generation.

According to an alternative example, the method may further comprise the act of operating a turbine by means of the produced EM radiation energy output, and generating electricity by means of the turbine. The turbine may be a steam turbine.

It is noted that the steps of the method described above, or any of its embodiments, do not have to be performed in the exact order disclosed above.

According to a second aspect of the invention, there is provided an apparatus for performing the method of claim 1, according to claim 10.

The details and advantages of the second aspect of the invention are largely analogous to those of the first aspect of the invention, wherein reference is made to the above.

The apparatus comprises an EM source unit for producing magnetic and/or electric fields. In a non-limiting example, the EM source unit and the source unit for producing EM radiation input energy are the same.

The apparatus comprises a fuel container for containing the first target matter and the second target matter. The fuel container may contain a material which absorbs radiation and/or absorbs neutrons. In particular, the fuel container may contain a material which absorbs soft radiation and/or absorbs thermal neutrons. The fuel container may comprise a ceramic material. The ceramic material may comprise an aluminum oxide.

According to one embodiment, the fuel container is a pressure chamber. By means of the pressure chamber the reactor fuel pressure in the the fuel container may be adjusted and controlled in an improved manner. For example, when the first target matter is brought from a solid state into a gas state, the volume of the first target matter may become larger, thereby increasing the pressure in the fuel container. The pressure may be controlled by means of a venting system connected to the the pressure chamber. The venting system may also be used to supply the first target matter in a gaseous form and/or a liquid form to the reactor.

The first target matter and the second target matter are mixed. The first and second target matter may be proportionally mixed, whereby the amount of first target matter the amount of second target matter is adapted to produce an increased amount of neutrons. By means of the mixed target matters, long-term operations of the apparatus may be maintained in a stable manner. The stability may be provided at predetermined gain levels.

In a first non-limiting example, at least one of the first target matter and the second target matter is provided in the form of grains. In a second non-limiting example, the second target matter is provided in the form of a net. In a third non-limiting example, the second target matter is provided in the form of a string or a fiber.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise.

Brief Description of the Drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:

Fig. 1 is a schematic cross-sectional view of an apparatus in accordance with an embodiment of the present inventive concept.
Fig. 2 is a schematic side view of the apparatus in Fig. 1.
Fig. 3 is a flow chart illustrating an embodiment of the inventive method.
Fig. 4 is a flow chart illustrating the step of maintaining the power generation according to the flow chart in Fig. 3.
Fig. 5 is a power versus time simulation of a $^7$Li and $^{58}$Ni device.
Fig. 6 is a power versus time simulation of a D and $^{58}$Ni device.

Detailed Description of Preferred Embodiments

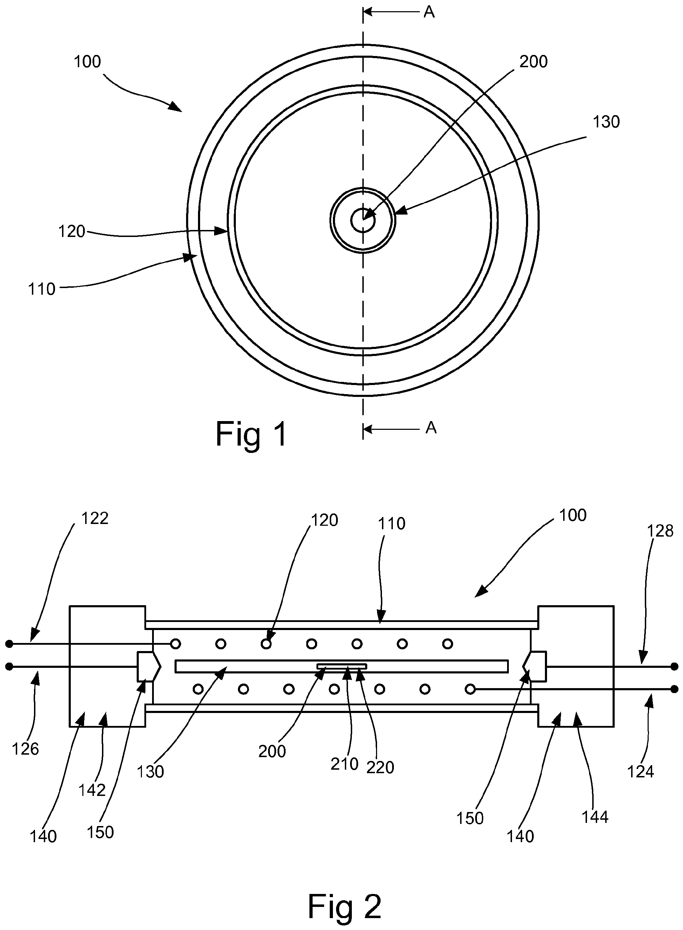

Next, the inventive concept will be described with reference to Fig. 1 and Fig. 2 which schematically illustrate an apparatus 100 in accordance with an embodiment of the present inventive concept. Fig. 1 is a cross-sectional view of the apparatus 100 and Fig. 2 is a side view along the view A-A in Fig. 1.

The apparatus 100 may be referred to as a reactor cylinder, or simply a reactor, and comprises a chamber 110, an induction coil arrangement 120, a fuel container 130 and a side part arrangement 140.

The chamber 110 is a ceramic cylinder forming an outer barrier of the apparatus 100 and enclosing the induction coil arrangement 120 and the fuel container 130. The chamber 110 has an annular cross-section. Moreover, the chamber 110 is tightly fitted with the side part arrangement 140.

The induction coil arrangement 120 is symmetrically arranged in a twisted configuration around the fuel container 130. Thereby, a geometric focusing onto a reactor centre of the apparatus 100 is provided. The induction coil arrangement 120 comprises at least one induction coil. A first wire 122 is connected to a left end of the induction coil arrangement 120 and a second wire 124 is connected to a right end of the induction coil arrangement 120. In operation of the apparatus 100, the first 122 and the second 124 wires are connected to an electrical power source (not shown) which powers the induction coil arrangement 120. The electrical power source is arranged to pass an alternating current through an electromagnet in the induction coil arrangement 120.

According to the present embodiment, the power source is arranged to supply a square-wave signal to the induction coil arrangement 120. The square-wave signal has a fixed amplitude and width, and is chosen such that it contains at least one resonance frequency mode. The power of the signal from the power source is fixed.

The fuel container 130 has an annular cross-section as can be seen in Fig. 1. Moreover, the fuel container 130 is made of steel. There is fuel 200 provided in a centre portion of the fuel container 130 which extends along a longitudinal portion of the fuel container 130. The fuel 200 comprises a first target matter 210 and a second target matter 220. Initially, i.e. before any operation of the apparatus 100, the first target matter 210 comprises Lithium-7, $^7$Li, and the second target matter 220 comprises Nickel-58, $^{58}$Ni. According to the present embodiment, the first 210 and the second 220 target matter are provided in the form of grains and are mixed.

Optionally, the fuel container 130 may comprise a neutron absorption shield (not shown) for blocking neutrons. Also, the fuel container 130 may comprise a radiation absorption shield (not shown) for blocking radiation. The neutron and/or radiation absorption shield may be arranged on at least portions of the fuel container 130. For example, a single shield may form the neutron and radiation absorption shield.

It is understood that the above example is non-limiting and that other materials may be comprised in the first target matter 210, such as deuterium. Moreover, it is understood that other materials may be comprised in the second target matter 220, such as $^{40}$Ca, $^{46}$Ti, $^{52}$Cr, $^{64}$Zn, $^{70}$Ge and $^{74}$Se.

The side part 140 arrangement comprises a first side part 142 and a second side part 144. The side part arrangement 140 comprises a discharge electrode unit 150 which is arranged in the first 142 and second 144 side part. A third wire 126 is connected to a left discharge electrode of the discharge electrode unit 150 and a fourth wire 128 is connected to a right discharge electrode of the discharge electrode unit 150. In operation of the apparatus 100, the third 126 and the fourth 128 wires are connected to an electrical power source (not shown) which powers the discharge electrode unit 150.

According to an example, the discharge electrode unit 150 is spatially separated from the fuel container 130. The discharge electrode may fire high-voltage, nano-extended pulses at controlled intervals. A voltage of the pulses may be of the order of kilovolts, kV. It is clear that, according to an alternative example, the discharge electrode unit 150 may be spatially connected to the fuel container 130.

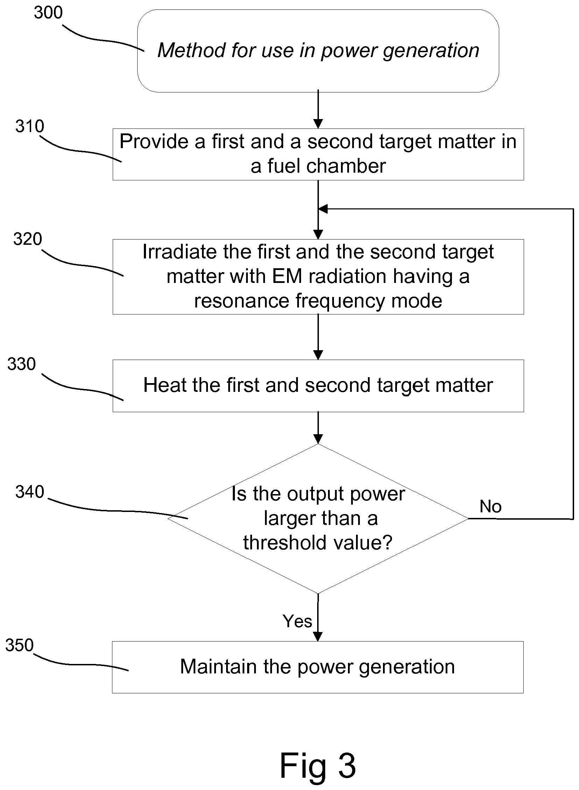

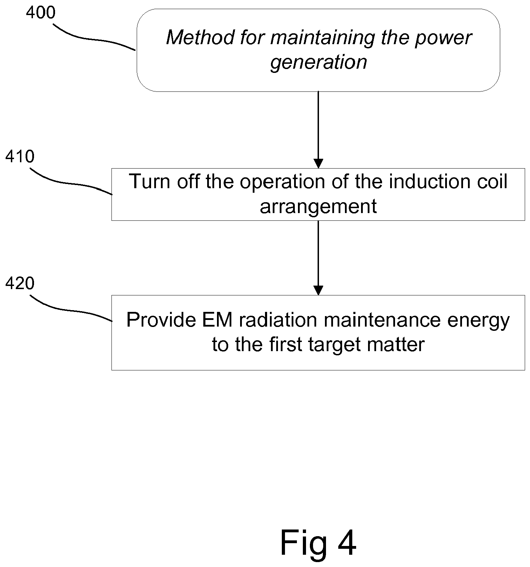

Next, an embodiment of the inventive method (Box 300) for use in power generation will be described with reference to the flow charts in Fig. 3 and Fig. 4. The method is implemented in the apparatus, or reaction cylinder, 100 which has been described above.

First, the fuel 200 is provided in the fuel container 130 (Box 310). The fuel 200 comprises the first target matter 210 and the second target matter 220 which comprise $^7$Li and $^{58}$Ni, respectively. More specifically, the fuel 200 comprises $^7$Li which is mixed with $^{58}$Ni. Both $^7$Li and $^{58}$Ni are provided in solid form.

Next, the fuel 200 is irradiated by EM radiation (Box 320) by means of the induction coil arrangement 120 as has been described above. Thereby, the first target matter 210 is first brought into a gaseous, and partially ionized state, and subsequently a higher energy state via wave resonance. More specifically, the EM radiation comprises at least one resonance frequency mode having a frequency which is close to but below a critical resonance frequency. The critical resonance frequency is a frequency at which a gradient force which is induced by the EM irradiation becomes singular. The characteristics of the gradient force have been detailed in the summary section above. In particular, it has been explained that the gradient force acts in different directions below and above the critical resonance frequency. The directions may be opposed to each other. In particular, the gradient force acts to contract the matter in the fuel 200 below the critical resonance frequency.

The irradiation by EM radiation is gradually increased to a fixed input power.

The induction coil arrangement 120 induces further heating of the fuel 200 (Box 330). Notice that the combined central discharge channel and the geometrical focus of induction heating give an increased radiative energy deposition on the fuel 200.

Geometrical focusing may scale with a size of the apparatus 100. In a non-limiting example, geometrical focusing in the apparatus 100 may amplify the radiation at the focal point by a factor of 2-6, depending on the focussing geometry. Thereby, the gradient forces versus input power for the first and second target matter may be amplified. Note that in this case, the force values are for wavelengths well below resonance.

As the fuel 200 is heated up, the first target matter 210 it is brought into a gas state and subsequently it becomes ionized and reaches a plasma state. Moreover, the second target matter 220 will remain in solid or liquid form. Indeed, by virtue of a relatively low boiling point of 1342° C, lithium can more easily be transferred to a plasma state. This would also be valid for deuterium. On the other hand, the relatively high boiling point of nickel of 2913 °C implies that it will remain in solid or liquid form, at least during a longer time period.

The discharge electrode unit 150 ionizes and heats the gas in the reactor cylinder 100. The discharge electrodes 150 at both ends of the reactor cylinder 100 create a charge channel therein, whereby the fuel 200 in the fuel container 130 may maintain a predetermined ionization state.

The $^7$Li in the fuel mix is therefore expected to exceed its boiling temperature, thereby enhancing the $^7$Li gas/ion abundance in the discharge tube. Conversely, $^{58}$Ni will remain in solid or in melted form at excess temperature, becoming the main gradient force attractor in the reactor. One reason for this is that the first target matter 210, in this example comprising $^7$Li, vaporizes and ionizes and is quickly distributed in the fuel container 130 due to a high temperature therein. On the other hand, the second target matter 220, in this example comprising nickel, will gradually become the hottest object in the fuel container 130 due to the process of neutron capturing. Thereby, the second target matter 220 will be the strongest attractor in the apparatus 100. A high melting point of the second target matter 220 counteracts evaporation of the second target matter 220. As a consequence, the second target matter 220 may remain during a longer time period and may thereby attract the surrounding gas and/or plasma.

Besides heating, the combined inductive and discharge radiation contains a wide spectrum of harmonics, the latter being close to but below the critical resonance frequency.

The critical resonance frequency changes gradually under the heating process of the fuel 200 until a state of equilibrium where all the lithium has been vaporized and/or ionized. The state of equilibrium may be a state wherein ionization and recombination are in balance. The state of equilibrium may be determined by a recombination frequency.

As the temperature of the fuel 200 becomes higher, the gradient-force core contraction of the fuel 200 and attraction of ambient particles become higher. Once the fuel 200 reaches fission/spallation energies for the first target matter 210, the first target matter 210 releases neutrons and undergoes an isotope shift from $^7$Li to $^6$Li.

The released neutrons are captured by the second target matter 220 which undergoes at least one isotope shift. Additionally, EM radiation output energy is released when a neutron is captured. For example, $^{58}$Ni in the second target matter 220 may shift into the isotope $^{60}$Ni by capturing two neutrons or into the isotope $^{62}$Ni by capturing four neutrons.

If the output power produced by the apparatus 100 is larger than a power threshold value (Box 340), the apparatus 100 may enter a maintenance mode (Box 350). The maintenance mode is explained below with reference to Fig. 4.

If the output power produced by the apparatus 100 is smaller than the power threshold value (Box 340), the fuel 200 is further irradiated by EM radiation (Box 320) and additional heat is provided (Box 330). The irradiation and heating by the induction coil arrangement 120 and the discharge electrode unit 150 continue until the EM radiation output power produced by means of the neutron capturing is larger than the power threshold value.

The apparatus 100 enters the maintenance mode (Box 400) when the EM radiation output power produced by the apparatus 100 is above the power threshold value.

First, the operation of the induction coil arrangement 120 is turned off (Box 410). The turning off is implemented gradually. Thereby, the irradiation and heating provided from the induction coil arrangement 120 to the fuel 200, and in particular to the first target matter 210, is terminated.

Then, the first target matter 210 is exposed to EM radiation maintenance energy (Box 420). According to the present example, the EM radiation maintenance energy is provided solely from the discharge electrode unit 150. Thereby, the process of spallation, i.e. neutron releases, of the first target matter 210 may be maintained using less input power. The EM radiation maintenance energy preferably comprises a resonance frequency mode having a frequency which is close to but below the critical resonance frequency. Additionally, the spallation process may be better controlled since the discharge electrode unit 150 may be better controlled as compared to the induction coil arrangement 120. Indeed, the discharge electrode unit 150 may provide for more precise frequencies. In particular, the improved control of the discharge electrode unit 150 implies that the power output may be better controlled.

This state of the apparatus 100 may be referred to as a quasi-steady state, QSS, since less input power is needed for maintaining the process of neutron capturing and hence the power generation. Indeed, a small input power may give rise to a large power gain.

During operation of the apparatus 100, or equivalently the reactor, in particular during the quasi-steady state, the net power generated inside the apparatus 100 is balanced by a radiative loss of the apparatus 100, i.e. a power emitted from the surface of the apparatus 100, such as from the chamber 110. The power emitted from the surface may be used for operating a device as will be elaborated on further below.

External heating of $^7$Li and $^{58}$Ni will at best establish neutron spallation in the first target matter 210 and neutron capturing in the second target matter 220 up to a theoretical QSS level. For the purpose of illustration, and based on the classical problem of heat exchange, a function

$$P(t) = P_0(1 - \exp(-t/t_0))$$

may be used to describe a power growth generated by the combined apparatus 100. Here, $P_0$ is the QSS power, i.e. $P_{reactor} = P_{emitted} = P_0$. Notice that this is an idealized QSS. In reality, the process may change with time, for example involving neutron capture by other elements, or the gradual "degradation" of the primary isotope with time, e.g. $^{58}$Ni to $^{60}$Ni to $^{62}$Ni. The latter illustrates that internal processes drive QSS to a large extent. Internal heating by neutron capture may enhance the spallation rate in the first target matter 210 and the rate of neutron capturing in the second target matter 220, leading to power gain rates in excess of that possible by external heating. Eventually, internal heating may become the main gain driver in the process in the apparatus 100. Thereby, the gain ratio, defined as the output power divided by the input power, may be magnified by a large factor. In non-limiting example, this factor may be between 3 or 20, or between 5 and 10. As a consequence of the above, a new QSS may be obtained.

In view of the above, an important issue is to provide a proper reactor design, and material used to conserve, and/or to withstand the reactor wall temperature.

Thus, the spallation process may eventually become almost self-sustained by internal heating by means of the neutron capturing and, in addition, a minor input of resonating wave power from the discharge electrode unit 150. This may lead to an efficient reaction process requiring only minor power input.

Optionally, the apparatus 100 further comprises a blocking device (not shown) which is arranged to terminate the production of neutrons once the apparatus 100 has reached the quasi-steady state. By means of the blocking device, the power generation may be terminated or moderated by lowering the production rate of neutrons. The power generation may be moderated when the power output is larger than desired. The blocking device may be arranged near the centre of the fuel container 130. The blocking device may comprise a neutron-absorbing material which may be inserted into the fuel container 130 for blocking neutrons which have been released from the first target matter 210. In non-limiting examples, the neutron-absorbing material may be xenon-135 or samarium-149.

The power generation described above may be continued until a fixed part of the fuel 200 has been turned into used-up fuel or until the output power declines below a lower output power. By used-up fuel is here meant that the first target matter, initially comprising $^7$Li has been turned into the isotope $^6$Li, and/or that the second target matter, initially comprising $^{58}$Ni has been turned into other nickel isotopes, such as $^{58}$Ni or $^{62}$Ni.

Once the initial fuel 200 has been turned into used-up fuel, the apparatus 100 may be loaded with new fuel 200. Optionally, the loading of new fuel may be provided at regular time intervals, before the initial fuel 200 has been used up. According to an alternative example, deuterium in liquid form or in gas form may be injected continuously.

The apparatus 100 as described above may be comprised in a power plant (not shown) for generation of electricity. The power plant may comprise the apparatus 100, a steam turbine and additional equipment for generating electricity which are known to a person skilled in the art. The electricity may be generated by utilizing the output power from the apparatus 100.

In particular, the method described above may be part of a method for generating electricity in a power plant. The latter method may comprise further steps for generating the electricity.

It is understood that the output power from the apparatus 100 may be used for operating various types of devices. In non-limiting examples, the device may be a Stirling motor, a steam motor, etc. There may be a heat exchanger provided between the apparatus 100 and the device.

Additionally, two or more apparatuses 100 may be provided in series or in parallel for providing more output power.

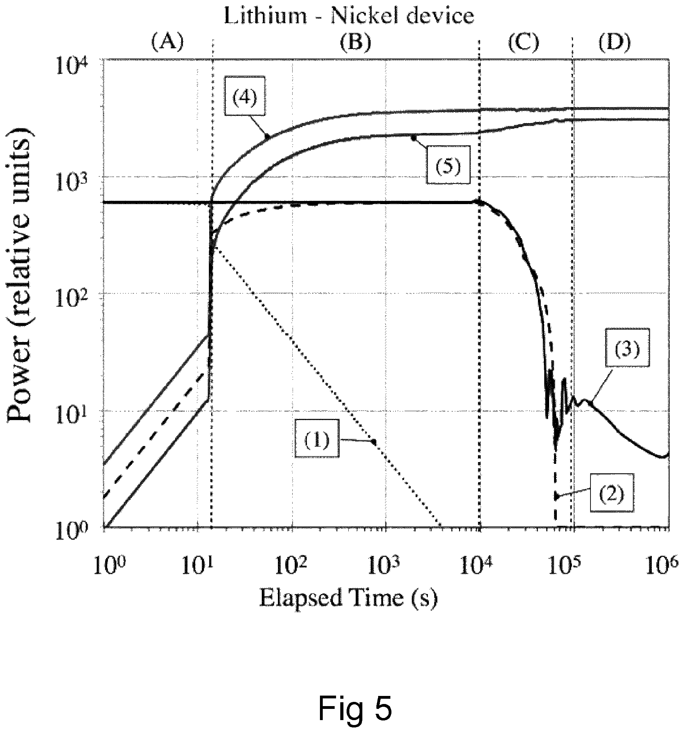

Fig. 5 is a power versus time simulation of a $^7$Li and $^{58}$Ni device demonstrating the different operational phases (A)-(D). (A) Initial gasification and ionization phase of the first target matter. (B) Transition phase leading to the first quasi-steady-phase. (C) Phase combining a gradual power-down of the external heater with temperature feed back external EM wave emissions near resonance. (D) Temperature feed back external EM wave phase operating at the second level quasi-steady-state, characterized by a power gain raised by a factor of 10-50. (1) Gasification/ionization power. (2) Inductive coil input power. (3) Maintenance wave power to acquire the second level quasi-steady-state. (4) Genearted reactor power. (5) Excess power (fusion induced spallation).

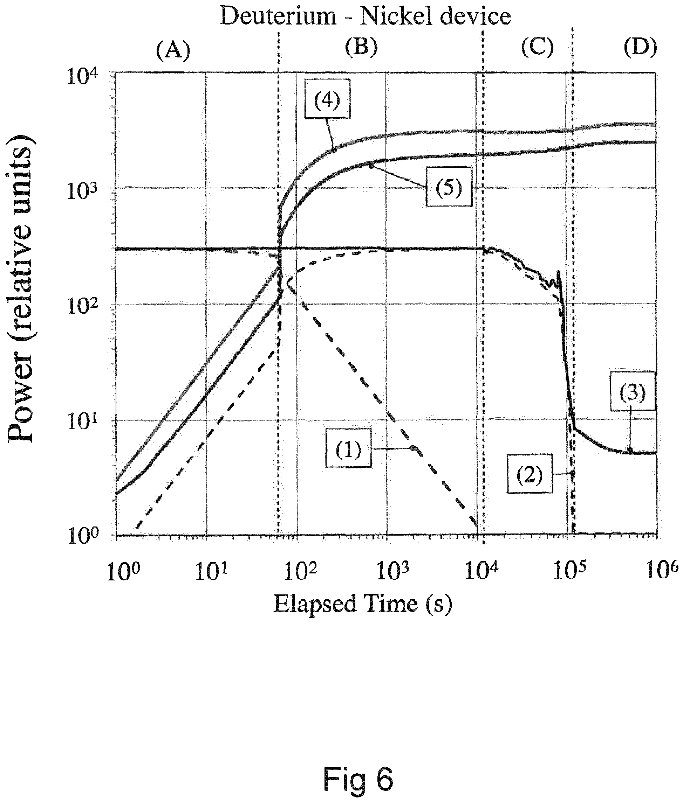

Fig. 6 is a power versus time simulation of a D and $^{58}$Ni device demonstrating the response phases as in Fig. 5. Notice that the D - $^{58}$Ni device is generically about three times more efficient than the $^7$Li - $^{58}$Ni device, capable of operating at a lower external power and wave power input.

The invention has mainly been described above with reference to a few embodiments. However, as is readily appreciated by a person skilled in the art, other embodiments than the ones disclosed above are equally possible within the scope of the invention, as defined by the appended patent claims. In particular, the particular choices of the first and second target matter should not be seen as limiting but only represent exemplifying target matters. For example, the first target matter may comprise deuterium, or a mixture of $^7$Li and deuterium, and the second target matter may comprise $^{40}$Ca, $^{46}$Ti, $^{52}$Cr, $^{64}$Zn, $^{58}$Ni, $^{70}$Ge or $^{74}$Se, or a mixture of two or more of these isotopes. A further embodiment comprises providing a third target matter comprising a catalyst material.

**Claims**

1. A method for use in power generation comprising:

bringing a first target matter (210) via wave resonance into a higher energy state by exposing the first target matter to electromagnetic radiation input energy provided by a first wave source for producing a first isotope shift in the first target matter and neutrons resulting from the first isotope shift,
capturing the neutrons by a second target matter (220) for producing a second isotope shift in the second target matter and electromagnetic radiation output energy,
wherein, when the resulting electromagnetic radiation output power is produced above a power threshold value, maintaining the production of electromagnetic radiation output energy by exposing the first target matter to electromagnetic radiation maintenance energy provided by means of a second wave source.

**2.** The method according to claim 1, wherein the electromagnetic radiation input energy is sourced by electromagnetic radiation comprising at least one resonance frequency mode comprised in a frequency interval.

**3.** The method according to claim 2, wherein the at least one resonance frequency mode is associated with an inter-atomic distance of the first target matter.

**4.** The method according to claim 2 or 3, wherein the at least one resonance frequency mode is a gas or plasma resonance frequency mode of the first target matter, a plasma resonance that characterize magnetized and/or non-magnetized plasmas of the first target matter, or a solid/fluid/gaseous/plasma resonance frequency mode of the second target matter.

**5.** The method according to any of claims 1-4, further comprising heating at least one of the first target matter and the second target matter.

**6.** The method according to any of claims 1-5, wherein the electromagnetic radiation input energy is provided in the form of a square wave signal or a sinus wave signal.

**7.** The method according to any one of claims 1-6, wherein the electromagnetic radiation maintenance energy is sourced by electromagnetic radiation comprising at least one resonance frequency mode comprised in a frequency interval.

**8.** The method according to any of claims 1-7, further comprising providing a third target matter comprising a catalyst material.

**9.** The method according to any of claims 1-8, further comprising bringing the first target matter into a plasma state.

**10.** An apparatus for performing the method of claim 1 the apparatus comprising:

a first wave source for producing electromagnetic radiation input energy,
a second wave source for producing electromagnetic radiation maintenance energy,
a first target matter (210),
a second target matter (220), and
a fuel container (130) for containing the first target matter and the second target matter,
wherein the first target matter and the second target matter are mixed,
wherein the first wave source is arranged to expose the first target matter to the electromagnetic radiation input energy for producing an isotope shift in the first target matter and neutrons resulting from the isotope shift,
wherein the second target matter is arranged to capture said neutrons and has a nuclear binding energy which is smaller than the nuclear binding energy of the isotope, or isotopes, into which it is shifted after the process of neutron capture.

**11.** The apparatus according to claim 10, wherein the fuel container is a pressure chamber.

**12.** The apparatus according to claim 10 or 11, wherein the first wave source comprises an induction coil arrangement (120).

**13.** The apparatus according to any one of claims 10-12, further comprising a discharge electrode unit (150).

**Patentansprüche**

**1.** Verfahren zur Verwendung in der Leistungserzeugung, umfassend:

Versetzen eines ersten Zielmaterials (210) über Wellenresonanz in einen höheren Energiezustand durch Exponieren des ersten Zielmaterials gegenüber durch eine erste Wellenquelle bereitgestellter elektromagnetischer Strahlungseingangsenergie zum Erzeugen einer ersten Isotopieverschiebung im ersten Zielmaterial und von aus der Isotopieverschiebung resultierenden Neutronen,
Einfangen der Neutronen durch ein zweites Zielmaterial (220) zum Erzeugen einer zweiten Isotopieverschiebung im zweiten Zielmaterial und einer elektromagnetischen Strahlungsausgangsenergie,

wobei, wenn die resultierende elektromagnetische Strahlungsausgangsleistung oberhalb eines Leistungsgrenzwerts erzeugt wird, die Erzeugung elektromagnetischer Strahlungsausgangsenergie durch Exponieren des ersten Zielmaterials gegenüber mittels einer zweiten Wellenquelle bereitgestellter elektromagnetischer Strahlungserhaltungsenergie erhalten wird.

2. Verfahren nach Anspruch 1, wobei die elektromagnetische Strahlungseingangsenergie durch elektromagnetische Strahlung bezogen wird, die wenigstens einen in einem Frequenzintervall umfassten Resonanzfrequenzmodus umfasst.

3. Verfahren nach Anspruch 2, wobei der wenigstens eine Resonanzfrequenzmodus mit einem inter-atomaren Abstand des ersten Zielmaterials assoziiert ist.

4. Verfahren nach Anspruch 2 oder 3, wobei es sich bei dem wenigstens einen Resonanzfrequenzmodus um einen Gas- oder Plasma-Resonanzfrequenzmodus des ersten Zielmaterials, eine magnetisierte und/oder nichtmagnetisierte Plasmen des ersten Zielmaterials charakterisierende Plasmaresonanz oder einen Fest-/Fluid-/Gas/Plasma-Resonanzfrequenzmodus des zweiten Zielmaterials handelt.

5. Verfahren nach einem der Ansprüche 1 bis 4, ferner umfassend Erwärmen des ersten Zielmaterials und/oder des zweiten Zielmaterials.

6. Verfahren nach einem der Ansprüche 1 bis 5, wobei die elektromagnetische Strahlungseingangsenergie in Form eines Rechteckwellensignals oder eines Sinuswellensignals bereitgestellt wird.

7. Verfahren nach einem der Ansprüche 1 bis 6, wobei die elektromagnetische Strahlungserhaltungsenergie durch elektromagnetische Strahlung bezogen wird, die wenigstens einen in einem Frequenzintervall umfassten Resonanzfrequenzmodus umfasst.

8. Verfahren nach einem der Ansprüche 1 bis 7, ferner umfassend ein Bereitstellen eines ein Katalysatormaterial umfassenden dritten Zielmaterials.

9. Verfahren nach einem der Ansprüche 1 bis 8, ferner umfassend ein Versetzen des ersten Zielmaterials in einen Plasmazustand.

10. Vorrichtung zum Durchführen des Verfahrens nach Anspruch 1, wobei die Vorrichtung Folgendes umfasst:

eine erste Wellenquelle zum Erzeugen elektromagnetischer Strahlungseingangsenergie,
eine zweite Wellenquelle zum Erzeugen elektromagnetischer Strahlungserhaltungsenergie,
ein erstes Zielmaterial (210),
ein zweites Zielmaterial (220), und
einen Brennstoffbehälter (130) zum Aufnehmen des ersten Zielmaterials und des zweiten Zielmaterials,
wobei das erste Zielmaterial und das zweite Zielmaterial vermischt sind,
wobei die erste Wellenquelle eingerichtet ist, um das erste Zielmaterial zum Erzeugen einer Isotopieverschiebung im ersten Zielmaterial und von aus der Isotopieverschiebung resultierenden Neutronen gegenüber der elektromagnetischen Strahlungseingangsenergie zu exponieren,
wobei das zweite Zielmaterial eingerichtet ist, um die Neutronen einzufangen, und eine Kernbindungsenergie aufweist, die geringer ist als die Kernbindungsenergie des Isotops oder der Isotope, in die es nach dem Prozess des Einfangens der Neutronen verschoben ist.

11. Vorrichtung nach Anspruch 10, wobei es sich bei dem Brennstoffbehälter um eine Druckkammer handelt.

12. Vorrichtung nach Anspruch 10 oder 11, wobei die erste Wellenquelle eine Induktionsspulenanordnung (120) umfasst.

13. Vorrichtung nach einem der Ansprüche 10 bis 12, ferner umfassend eine Entladungselektrodeneinheit (150).

**Revendications**

1. Procédé à utiliser dans le cadre de la génération d'énergie électrique comprenant de :

amener une première matière cible (210) via une résonance d'onde en un état d'énergie plus élevée en exposant la première matière cible à une énergie d'entrée à rayonnement électromagnétique fourni par une première source d'onde pour produire un premier déplacement isotopique dans la première matière cible et les neutrons résultant du premier déplacement isotopique,

capturer les neutrons par le second matière cible (220) pour produire un second déplacement isotopique dans la deuxième matière cible et une énergie de sortie à rayonnement électromagnétique,

dans lequel, lorsque la puissance de sortie à rayonnement électromagnétique de résultat est produite au-dessus d'une valeur seuil de puissance, maintenir la production d'énergie de sortie à rayonnement électromagnétique en exposant la première matière cible à une énergie de maintien de rayonnement électromagnétique fournie au moyen d'une deuxième source d'onde.

2. Procédé selon la revendication 1, dans lequel l'énergie d'entrée à rayonnement électromagnétique est sourcée par un rayonnement électromagnétique comprenant au moins un mode de fréquence de résonance compris dans un intervalle de fréquence.

3. Procédé selon la revendication 2, dans lequel au moins un mode de fréquence de résonance est associé à une distance inter-atomique de la première matière cible.

4. Procédé selon la revendication 2 ou 3, dans lequel au moins un mode de fréquence de résonance est un mode de fréquence de résonance au gaz ou au plasma de la première matière cible, une résonance au plasma qui caractérise des plasmas magnétisés et/ou non magnétisés de la première matière cible ou un mode de fréquence de résonance solide/fluide/gazeux/plasma de la deuxième matière cible.

5. Procédé selon une quelconque des revendications 1-4, comprenant en outre de chauffer au moins une de la première matière cible et la deuxième matière cible.

6. Procédé selon une quelconque des revendications 1-5, dans lequel l'énergie d'entrée à rayonnement électromagnétique est fournie sous la forme d'un signal d'onde carrée ou un signal d'onde sinusoïdale.

7. Procédé selon une quelconque des revendications 1-6, dans lequel l'énergie de maintien à rayonnement électromagnétique est sourcée par un rayonnement électromagnétique comprenant au moins un mode de fréquence de résonance compris dans un intervalle de fréquence.

8. Procédé selon une quelconque des revendications 1-7, comprenant en outre de fournir une troisième matière cible comprenant un matériau catalyseur.

9. Procédé selon une quelconque des revendications 1-8, comprenant en outre d'amener la première matière visible dans un état plasmatique.

10. Dispositif pour mettre en oeuvre le procédé selon la revendication 1, le dispositif comprenant :

une première source d'onde pour produire une énergie d'entrée à rayonnement électromagnétique,
une deuxième source d'onde pour produire une énergie de maintien à rayonnement électromagnétique,
une première matière cible (210),
une deuxième matière cible (220), et
un conteneur de carburant (130) pour contenir la première matière cible et la deuxième matière cible,
dans lequel la première matière cible et la seconde matière cible sont mélangés, dans lequel la première source d'onde est agencée afin d'exposer la première matière cible à l'énergie d'entrée à rayonnement électromagnétique pour produire un déplacement isotopique dans la première matière cible et des neutrons résultant du déplacement isotopique,
dans lequel la seconde matière cible est agencée pour capturer lesdits neutrons et a une énergie de liaison nucléaire qui est plus petite que l'énergie de liaison nucléaire de l'isotope, ou des isotopes, dans lequel elle est déplacée après le processus de capture de neutrons.

11. Dispositif selon la revendication 10, dans lequel le conteneur de carburant est une chambre pressurisée.

12. Dispositif selon la revendication 10 ou 11, dans lequel la première source d'onde comprend un agencement de bobine à induction (120).

**13.** Dispositif selon une quelconque des revendications 10-12, comprenant en outre une unité de l'électrode de décharge (150).

Fig 1

Fig 2

300 *Method for use in power generation*

310 Provide a first and a second target matter in a fuel chamber

320 Irradiate the first and the second target matter with EM radiation having a resonance frequency mode

330 Heat the first and second target matter

340 Is the output power larger than a threshold value?

No

Yes

350 Maintain the power generation

# Fig 3

400

*Method for maintaining the power generation*

410

Turn off the operation of the induction coil arrangement

420

Provide EM radiation maintenance energy to the first target matter

# Fig 4

Fig 5

Fig 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **IMASAKI et al.** *Gamma Ray Transmutation,* 06 June 2006, 1-3